# EUROPÄISCHE PATENTSCHRIFT

(11) **EP 1 016 826 B1**
(45) Veröffentlichungstag und Bekanntmachung des Hinweises auf die Patenterteilung: **24.11.2004**
(21) Anmeldenummer: 99126002.7
(22) Anmeldetag: 27.12.1999
(51) Int. Cl.: F23D 14/66, F23D 14/16

(54) **Gasbrenner und Verfahren zum Betrieb desselben**
Gas burner and method of operating the same
Brûleur à gaz et son procédé de fonctionnement

(30) Priorität: 28.12.1998 DE 19860459; 22.12.1999 DE 19962414
(43) Veröffentlichungstag der Anmeldung: 05.07.2000
(73) Patentinhaber: ROBERT BOSCH GMBH, 70442 Stuttgart (DE)
(72) Erfinder: Daniel, Walter, Dipl.-Ing., 71065 Sindelfingen (DE); Laqua, Ekkehard, Ing., 68794 Oberhausen (DE); Loehmann, Juergen, 90195 Stuttgart (DE); Lehr, Walter, 70499 Stuttgart (DE); Schmid, Juergen, Prof.Dr.Ing., 34128 Kassel (DE)

(56) Entgegenhaltungen:
- EP-A- 0 463 218
- EP-A- 0 514 930
- EP-A- 0 567 865
- EP-A- 0 601 269
- CH-A- 678 222
- DE-A- 2 706 043
- GB-A- 1 360 796
- US-A- 5 749 720
- PATENT ABSTRACTS OF JAPAN vol. 009, no. 268 (M-424), 25. Oktober 1985 (1985-10-25) & JP 60 114616 A (KAWASAKI JUKOGYO KK), 21. Juni 1985 (1985-06-21)

## Beschreibung

Die Erfindung betrifft einen Gasbrenner und ein Verfahren zum Betrieb desselben nach dem Oberbegriff der unabhängigen Ansprüche.

### Stand der Technik

Eine Nutzung der thermischen Restenergie von Brennerabgasen zur Erhöhung von Systemwirkungsgraden ist bekannt. Die Energienutzung der heißen Abgase erfolgt üblicherweise durch Wärmeübertragung vom heißen Abgas auf ein kälteres Brenngas-Luft-Gemisch, beziehungsweise auch nur auf einen der Gemischpartner, falls die Mischung von Brenngas und Luft erst in der Verbrennungszone stattfindet. Derartige, kontinuierlich betriebene Abgas-Frischgas-Wärmetauscher werden als rekuperative Wärmetauscher bezeichnet.

Ein derartiger Gasbrenner mit einem rekuperativen Wärmetauscher ist beispielsweise aus JP-A-60114616 bekannt. Dabei sind in einem keramischen Block parallel nebeneinanderliegende Durchgänge für Luft und für das Abgas vorgesehen, sodass das heiße Abgas die Verbrennungsluft vorwärmt, bevor die Luft mit dem Brenngas ein Brenngas-Luftgemisch bildet.

Ein rezirkulierender Strahlungsbrenner mit einer Brennerplatte aus porösem Material ist aus EP 601269 bekannt. Hierbei strömt das Brenngas-Luftgemisch durch die poröse Brennerplatte und im Gegenstrom das heiße Abgas zurück.

Ein Brenner zum Verbrennen von Brennstoff in einem Verbrennungsraum, bei dem Brennstoff mit vorgewärmter Luft in Gegenwart von zugeführten Verbrennungsabgasen oxidiert wird, ist aus EP 463281 A1 bekannt. Dabei wird der Brennstoff mit extrem hoher Verbrennungsabgasrückführung im Wesentlichen flammenlos und pulsationsfrei zur Vermeidung hoher NOx-Emissionen oxidiert.

Eine weitere Brenneranordnung wird beispielsweise in der US-PS 4,038,022 beschrieben. Dabei werden das Brenngas und die zur Verbrennung benötigte Luft in getrennten Zuleitungen einer Brennerdüse zugeführt und die Luft mittels eines rekuperativen Wärmetauschers vorgewärmt.

Bei Erwärmung eines bereits vorgemischten Brenngas-Luft-Gemisches stellt sich das Problem, daß das Gemisch bei Temperaturen oberhalb von zirka 600 °C zünden kann, und die Verbrennung vor der eigentlichen Reaktionszone unkontrolliert einsetzt. Aus diesem Grund wird die Gemischvorwärmung oftmals auf Temperaturen unterhalb der jeweiligen Zündtemperatur begrenzt. Sollen die guten Verbrennungseigenschaften vorgemischter Brenner in größerem Umfang genutzt werden, ist ein optimaler Wirkungsgrad durch maximale Gemischvorwärmung mit konventionellen Rekuperatorbrennern jedoch nicht zu erreichen.

### Vorteile der Erfindung

Der Gasbrenner mit den kennzeichnenden Merkmalen des Anspruchs 1 weist den Vorteil auf, daß der Wirkungsgrad gegenüber bekannten Gasbrennern mit rekuperativen Wärmetauschern signifikant erhöht wird. Dadurch, daß im Wärmetauscher in Bereichen niedriger Temperatur eine Isolation vorgesehen ist, können die Strahlungsverluste, die auf den Temperaturgradienten zwischen Verbrennungszone und Wärmetauscher zurückzuführen sind, verringert werden. Dies hat den Vorteil, daß die Strahlung aus einem hohen Temperaturniveau ausgekoppelt wird. Gleichzeitig wird eine deutliche Reduzierung der Abgastemperatur erreicht. Im Idealfall verlassen die Abgase den erfindungsgemäßen Gasbrenner nahezu mit Umgebungstemperatur.

Durch die Integration einer Brennerplatte beziehungsweise eines Reaktionsbereiches in den rekuperativen Wärmetauscher übernimmt dieser die Funktion eines Flammenhalters. Auf diese Weise kann ein Vormischbrenner realisiert werden, bei dem keine Gefahr von Rückzündungen in den Vormischbereich auftritt. Dies hat insbesondere den Vorteil, daß ein großer Teil der Abgaswärme auf ein Frischgas übertragen werden kann, wodurch sehr hohe Vorwärmtemperaturen realisierbar sind. Darüber hinaus werden durch die bauliche Einheit von Brennerplatte und rekuperativem Wärmetauscher durch den Transport der vorgewärmten Gase bedingte Wärmeverluste vermieden.

Der erfindungsgemäße Vormischbrenner mit rekuperativem Wärmetauscher ist zur Einkopplung einer Brennstoffenergie in einen thermischen oder thermoelektrischen Prozeß verwendbar. Die Ausgestaltung der in den Wärmetauscher integrierten Durchgänge, die der Zuleitung des Verbrennungsgemisches zur Verbrennungszone dienen, sowie ihr Größenverhältnis zu den Abgaskanälen ist zweckmäßigerweise so dimensioniert, daß eine Rückzündung zuverlässig verhindert beziehungsweise die Zündtemperatur des Verbrennungsgemischs zu Temperaturen verschoben wird, die über der eigentlichen Zündtemperatur des Brenngases liegen. Gleichzeitig kann damit ein sehr hoher thermischer Wirkungsgrad erreicht werden. Die Austrittszonen der Durchgänge, die immer noch einen Bereich des rekuperativen Wärmetauschers bilden, sind dann gleichzeitig ein Teil der Reaktionszone.

Der rekuperative Wärmetauscher kann beispielsweise als Rohrbündel-Wärmetauscher ausgebildet sein, wobei die in den Wärmetauscher integrierten Durchgänge quer vom Abgas umströmt werden. Auch mehrfach wechselnde Strömungsrichtungen der Verbrennungsabgase sind realisierbar, wodurch ein Wärmetauscher nach dem Kreuz-Gegenstrom-Prinzip entsteht. Ebenso lassen sich statt rohrförmiger Durchgänge auch strukturierte oder gewellte Platten verwenden. Die Wärmeübertragung zu einem Erhitzerkopf einer thermisch betriebenen Anwendung erfolgt dabei typischerweise durch Strahlung und Konvektion.

Eine vorteilhafte Weiterbildung stellt die Realisierung eines rekuperativen Wärmetauschers mit Mikrokanälen als Zu- bzw. Ableitungen dar. Das Verbrennungsgemisch wird beim Passieren der Mikrokanäle des rekuperativen Wärmetauschers umgesetzt. Der Wärmetauscher in Mikrokanalausführung weist Kanäle mit geringen hydraulischen Durchmessern, also mit geringen Kanalquerschnitten auf, die insbesondere mit Hilfe der Mikrostrukturtechnik herstellbar sind. Bei derartigen Brennern kann die Verbrennung, eventuell sogar flammenlos, direkt in den Mikrokanälen stattfinden.

Eine weitere vorteilhafte Ausgestaltung der vorliegenden Erfindung besteht darin, sowohl die Außengeometrie als auch die Anordnung der Durchgänge zueinander zu variieren. Die Außengeometrie kann beispielsweise quader- oder zylinderförmig sein. Die Durchgänge sind beispielsweise nebeneinander oder hintereinander angeordnet. Zudem ist in vorteilhafter Weise eine Variation der Leitungsgeometrie möglich. Insbesondere kann dort, wo die Wärmetauscherzone in die Verbrennungszone übergeht, der Querschnitt verringert sein. Dies kann beispielsweise durch Querstreben erfolgen, die in die Durchgänge hineinragen. Besonders vorteilhaft ist aber eine kontinuierliche Verjüngung des Durchmessers mit zunehmender Temperatur des Verbrennungsgemisches. Auf diesem Wege ist eine Erwärmung des zündfähigen Gemisches auf Temperaturen oberhalb der Zündtemperatur des Brenngases möglich

Eine weitere vorteilhafte Form der Erfindung sieht vor, den Querschnitt der Durchgänge so zu bemessen, daß ein Energiegleichgewicht zwischen zugeführter und abgestrahlter Energie besteht, beziehungsweise daß genauso viel Energie über die Strahlung der Leitungsaußenflächen abgeführt werden kann, wie über den zugeführten Brennstoff nachgeliefert wird. Besonders bevorzugt ist ein Querschnittsdurchmesser, der im Bereich weniger Mikrometer liegt. Dadurch wird die während der Verbrennungsreaktion freigesetzte Wärme besonders effektiv an die Wandung abgegeben, wodurch die Reaktionstemperatur gut kontrollierbar wird.

Eine weitere vorteilhafte Ausbildung der Erfindung besteht darin, mittels des rekuperativen Wärmetauschers nicht das vorgemischte Verbrennungsgemisch vorzuwärmen, sondern die zur Verbrennung benötigte Luft. Diese kann auf sehr hohe Temperaturen erhitzt werden und wird mit einem in separaten Zuleitungen zugeführten Brenngas erst unmittelbar in der Verbrennungszone vermischt. Dabei ist besonders eine Brennerplattengeometrie von Vorteil, bei der das Brenngas entweder in parallel angeordneten Hohlkörpern geführt und über kleine Öffnungen in die heiße Verbrennungsluft eingedüst wird oder in Bohrungen einer aus einem porösen Material bestehenden Brennerplatte geführt wird und durch die Poren des porösen Materials in die heiße Verbrennungsluft gelangt. Bei beiden Anordnungen ist ein weitgehend homogenes Verbrennungsgemisch gewährleistet. Zeichnungen

Die Erfindung wird nachfolgend in Ausführungsbeispielen anhand der zugehörigen Zeichnungen näher erläutert. Es zeigen:
Figur 1 eine erste Ausführungsform des erfindungsgemäßen Gasbrenners;
Figur 2 eine Seitenansicht des erfindungsgemäßen Gasbrenners gemäß Figur 1;
Figur 3 eine zweite Ausführungsform des erfindungsgemäßen Gasbrenners;
Figur 4 den Gasbrenner gemäß Figur 3 in einer Seitenansicht;
Figur 5 den Gasbrenner gemäß Figuren 3 und 4 in einer Draufsicht;
Figur 6 eine dritte Ausführungsform des erfindungsgemäßen Gasbrenners;
Figur 7 eine Ausführungsvariante des Gasbrenners gemäß Figur 6;
Figur 8 eine vierte Ausführungsform des erfindungsgemäßen Gasbrenners;
Figur 9 eine fünfte Ausführungsform des erfindungsgemäßen Gasbrenners;
Figur 10 eine Ausführungsvariante des Gasbrenners gemäß Figur 9;
Figur 11 eine Brennerplatte gemäß einer sechsten Ausführungsform des erfindungsgemäßen Gasbrenners in der Draufsicht;
Figur 12 verschiedene Ausführungsvarianten der Brennerplatte gemäß Figur 11 im Querschnitt und
Figur 13 eine Brennerplatte gemäß einer siebten Ausführungsform des erfindungsgemäßen Gasbrenners im Querschnitt.

### Beschreibung der Ausführungsbeispiele

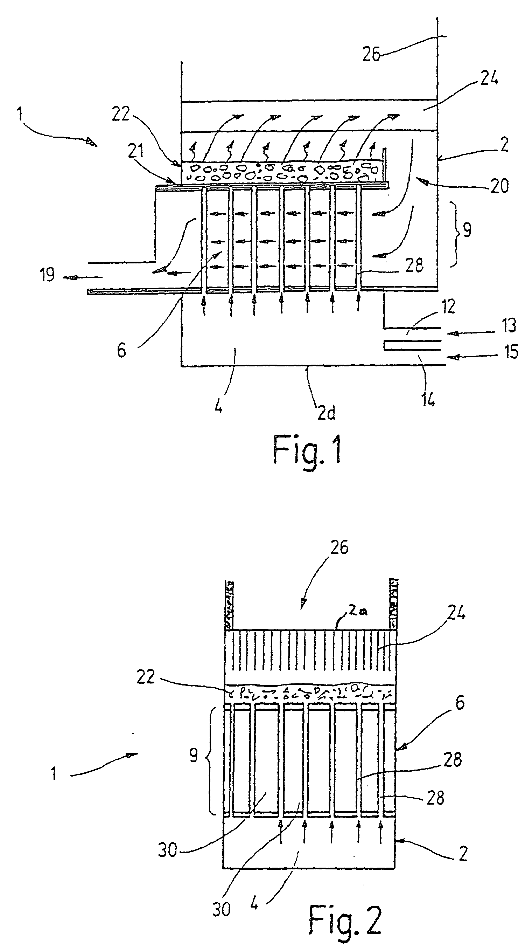

Figur 1 und 2 zeigen einen Gasbrenner 1 in einer ersten Ausführungsform. In einem geschlossenen Gehäuse 2 ist ein sogenannter rekuperativer Wärmetauscher 6 angeordnet, der senkrecht zu seiner Längserstreckungsrichtung von den Verbrennungsabgasen 20 durchströmt wird. Das obere heiße Ende des rekuperativen Wärmetauschers 6 ist als Brennerplatte ausgestaltet, die einen Porenbrenner 21 beinhaltet. An einer Unterseite 2d des Gehäuses 2 ist ein Vormischbereich 4 in Form einer Kammer vorgesehen, in den eine Brennstoffzufuhr 12 und eine Luftzufuhr 14 mündet. Im Vormischbereich werden zugeführtes Brenngas 13 und Luft 15 gleichmäßig miteinander vermischt und als brennbares Verbrennungsgemisch 11 einer Vielzahl von engen Durchgängen 28 des Wärmetauschers 6 zugeführt. Diese senkrecht stehenden Durchgänge 28 werden horizontal von den heißen Verbrennungsabgasen 20 in relativ breiten Abgasleitungen 30 umströmt, die dabei einen Großteil ihrer Wärmeenergie an das Verbrennungsgemisch 11 abgeben.

Die Durchgänge 28 sind zweckmäßigerweise so ausgeführt, daß ihr Durchmesser ausreichend klein ist, um eine Zündung des Gemisches zu unterdrücken bzw. zu so hohen Temperaturen zu verschieben, daß eine Zündung vor der eigentlichen Verbrennungszone 22 nicht auftreten kann. Vorreaktionen im Inneren der Durchgänge 28 sind jedoch durchaus möglich.

Am oberen Ende des rekuperativen Wärmetauschers 6 befindet sich im Bereich der Austrittsöffnungen der Durchgänge 28 die Verbrennungszone 22 des Porenbrenners 21. Auf diese Weise wird eine Integration des Reaktionsbereichs in den rekuperativen Wärmetauscher 6 erreicht, so daß der rekuperative Wärmetauscher 6 zusätzlich die Rolle eines Flammenhalters beziehungsweise einer Brennerplatte übernimmt. Aufgrund der fehlenden räumlichen Distanz zwischen rekuperativem Wärmetauscher 6 und Verbrennungszone 22 kann auf diese Weise eine effektive Erwärmung des Verbrennungsgemisches 11 erreicht werden.

Neben dem beschriebenen Verbrennungsverfahren mit einem Porenbrenner 21 können durchaus auch andere Verbrennungsverfahren realisiert werden, wie beispielsweise eine konventionelle Flammenverbrennung.

Beabstandet von der Verbrennungszone 22 ist das Gehäuse 2 nach oben hin verschlossen und zur Verbrennungszone 22 hin mit einer Vielzahl von senkrecht nach unten weisenden flachen Wärmetauscherrippen 24 versehen. Diese werden von den heißen Verbrennungsabgasen 20 umströmt, wobei eine Wärmeübertragung sowohl durch Strahlung als auch durch Konvektion erfolgen kann. An der Außenseite der Oberseite 2a des Gehäuses 2 befindet sich ein Erhitzerkopf 26, beispielsweise eines Stirlingmotors. Die die Verbrennungszone 22 vertikal verlassenden heißen Verbrennungsabgase 20 werden nach unten insgesamt um zirka 270° umgelenkt und durchströmen den rekuperativen Wärmetauscher 6 horizontal. Nachdem eine weitestgehende Wärmeübertragung auf das Verbrennungsgemisch erfolgt ist, treten die kalten Verbrennungsabgase 19 durch einen aus dem Gehäuse 2 heraus führenden Abgaskanal 18 aus. Der erfindungsgemäße Gasbrenner 1 wird extern gestartet, zum Beispiel über einen Zündfunken, eine Glühkerze oder durch externes Erhitzen, bis die Verbrennungsreaktion in der Verbrennungszone 22 stabil ist.

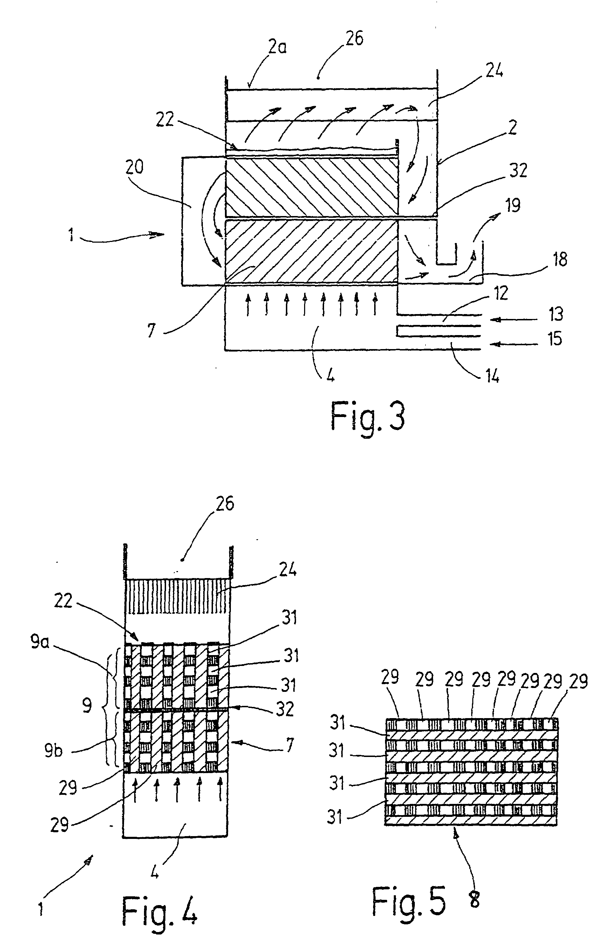

Die Figuren 3 bis 5 zeigen eine zweite Ausführungsform des erfindungsgemäßen Gasbrenners. In diesen Figuren ist ein Plattenwärmetauscher 7 mit einmal wechselnder Abgasströmungsrichtung dargestellt, wodurch ein Kreuz-Gegenstrom-Prinzip entsteht. Die Platten 8 sind dabei so strukturiert, daß sie Durchgänge 29 für die Zufuhr des Verbrennungsgemisches 11 vom Vormischbereich 4 zur Verbrennungszone 22 beinhalten und senkrecht dazu Abgasleitungen 31. Es eignen sich sowohl glatte, besser aber strukturierte oder gewellte Platten 8, um eine größere Oberfläche und damit eine bessere Wärmeübertragung zu gewährleisten.

Die heißen Verbrennungsabgase 20 kommen zunächst mit den Wärmetauscherrippen 24 in Kontakt, die an der Oberseite 2a des Gehäuses 2 vorgesehen sind und einen Wärmeübergang zum Erhitzerkopf 26 ermöglichen. Die Verbrennungsabgase 20 werden dabei umgelenkt und durchstreichen die obere Hälfte des rekuperativen Wärmetauschers 6 vollständig, werden an der entgegengesetzten Gehäuseseite vorzugsweise um 180° umgelenkt und durchströmen die untere Hälfte des rekuperativen Wärmetauschers 6. Die kalten Vebrennungsabgase 19 verlassen durch den Abgaskanal 18 schließlich den Gasbrenner. Die Abgaskanäle 31 sind horizontal unterteilt durch eine Trennebene 32, wodurch die Verbrennungsabgase umgelenkt werden. Auf diesem Wege entsteht eine Trennung der Wärmetauscherzone 9 in eine obere Hälfte 9a und eine untere Hälfte 9b, wobei die untere Hälfte des Plattenwärmetauschers 7 eine niedrigere Temperatur aufweist als die obere Hälfte.

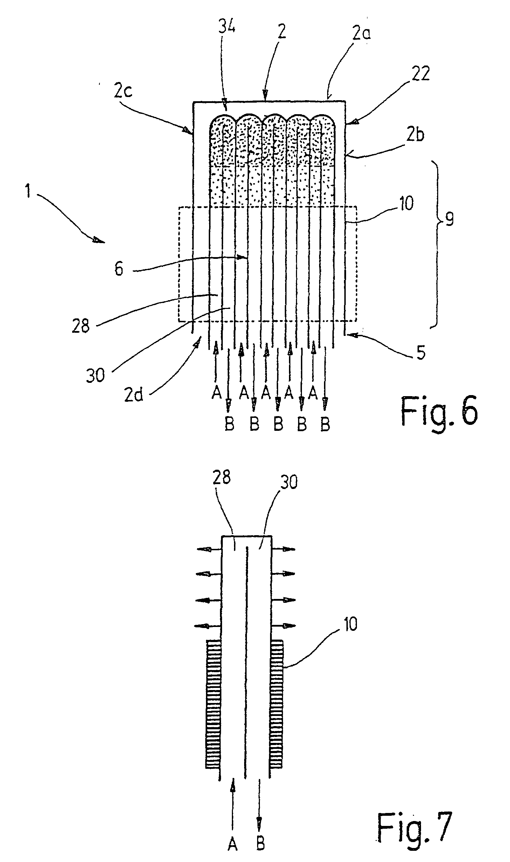

Die Figur 6 zeigt eine dritte Ausführungsform des Gasbrenners 1 und Figur 7 eine Ausführungsvariante hierzu. In einem Gehäuse 2 mit drei geschlossenen Seiten 2a, 2b und 2c und einer offenen Seite 2d ist eine kombinierte Brenner-Wärmetauschereinheit 34 aufgenommen. Diese Einheit 34 weist auf einer Seite eine Anschlußzone 5 und auf der gegenüberliegenden Seite eine Verbrennungszone 22 auf. Die Einheit 34 birgt weiterhin einen rekuperativen Wärmetauscher 6 in Mikrokanalausführung. Darin sind dicht nebeneinander, parallel zueinander verlaufende Durchgänge 28 für das Verbrennungsgemisch 11 und Abgasleitungen 30 für die Ableitung der Verbrennungsabgase 20 angeordnet, wobei sich an jeden Durchgang 28 jeweils eine Abgasleitung 30 anschließt. Die Leitungen 28 und 30 weisen einen geringen Durchmesser auf, der im Ausführungsbeispiel vorzugsweise im Bereich weniger Mikrometer liegt.

Die Öffnungen der Durchgänge 28 und der Abgasleitungen 30 an der unteren offenen Seite 2d des Gehäuses 2 entsprechen der Anschlußzone 5. In diesem Bereich werden das Verbrennungsgemisch 11 zugeführt und die Verbrennungsabgase 20 abgeleitet. Der rekuperative Wärmetauscher 6 weist zwischen der Anschlußzone 5 und der Verbrennungszone 22 eine eigentliche Wärmetauscherzone 9 auf. Die Verbrennungszone 22 geht dabei fließend in die Wärmetauscherzone 9 über, wie es in der Darstellung mit verschieden hellen Schattierungen angedeutet ist.

Das Verbrennungsgemisch 11 wird in die Durchgänge 28 in der durch den Pfeil A symbolisierten Zuführrichtung eingeleitet, gelangt in die Verbrennungszone 22 und wird dort verbrannt. Die heißen Verbrennungsabgase 20 strömen in den parallel verlaufenden Abgasleitungen 30 entgegen der Zuführrichtung A in einer durch den Pfeil B symbolisierten gegenläufigen Richtung zurück. Die Durchgänge 28 bzw. Abgasleitungen 30 haben einen so kleinen Querschnitt, daß die bei der Verbrennungsreaktion in der Verbrennungszone 22 freigesetzte Wärme bei sehr kleinen Temperaturdifferenzen an die Kanalwand abgegeben wird. Dieser Querschnitt kann wie im vorhergehenden Ausführungsbeispiel im Bereich weniger Mikrometer liegen. Dadurch wird die sich ergebende Reaktionstemperatur über den Massenstrom der zugeführten Brennstoffe, vorzugsweise gasförmiger Brennstoffe, kontrollierbar. Ähnlich wie bei der katalytischen Verbrennung kann die für die Stickoxidbildung kritische Reaktionstemperatur sicher unterschritten werden.

Aufgrund der Mikrostruktur der Leitungen 28 und 30 entsteht auf kleinem Raum genügend Oberfläche, um die in den Verbrennungsabgasen 20 enthaltene Wärmeenergie weitestgehend an das in den Durchgänge 28 zuströmende Verbrennungsgemisch abzugeben. Die Verbrennungsabgase 20 verlassen den Gasbrenner 1 an der Anschlußzone 5 als praktisch kaltes Verbrennungsabgas 19. Die Wärmeübertragungseigenschaften des rekuperativen Wärmetauschers 6 richten sich nach Auswahl, Beschichtung und/oder Strukturierung des keramischen Materials, aus dem der rekuperative Wärmetauscher gefertigt ist.

Für den Fall, daß die Wärmestrahlung der heißen Verbrennungsabgase 20 nur auf einem hohen Temperaturniveau ausgekoppelt werden soll, ist eine Isolation 10 in Bereichen niedriger Temperatur, wie beispielsweise in den der Anschlußzone 5 benachbarten Bereichen der Wärmetauscherzone 9 vorgesehen, die in Figur 6 gestrichelt angedeutet sind. Die Isolation 10 ist vorzugsweise eine reflektierende Isolation, so daß möglichst wenig Strahlung verlorengeht.

Figur 7 zeigt eine derartige Variante des in Figur 6 dargestellten Vormischbrenners 1. Hierbei liegen die Durchgänge 28 und die Abgasleitungen 30 nicht nebeneinander, sondern hintereinander. Weitere Varianten bestehen je nach Verwendungszweck in Änderungen der Leitungsführung und/oder -querschnitte, sowie der Außengeometrie, die zum Beispiel auch zylindrisch oder quaderförmig sein kann. Es ist lediglich darauf zu achten, daß der Leitungsquerschnitt so gewählt ist, daß die bei der Umsetzung freigesetzte Wärme nicht zur Überhitzung des Systems führen kann.

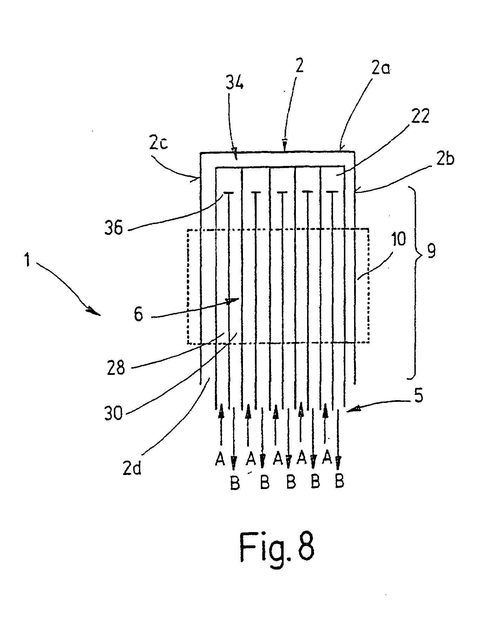

In Figur 8 ist eine vierte Ausführungsform des erfindungsgemäßen Gasbrenners in einer mit Figur 6 vergleichbaren Darstellung abgebildet. Der Unterschied zu den in Figur 6 und 7 gezeigten Varianten besteht darin, daß beim Übergang der Wärmetauscherzonen 9 in die Verbrennungszone 22 der Querschnitt der Leitungen 28 und 30 durch Querstreben 36 lokal verkleinert wird. Damit ist die Verbrennungszone 22 nicht diffus verteilt, wie es in Figur 6 durch die gepunktete Darstellung angedeutet ist, sondern sie ist relativ scharf begrenzt.

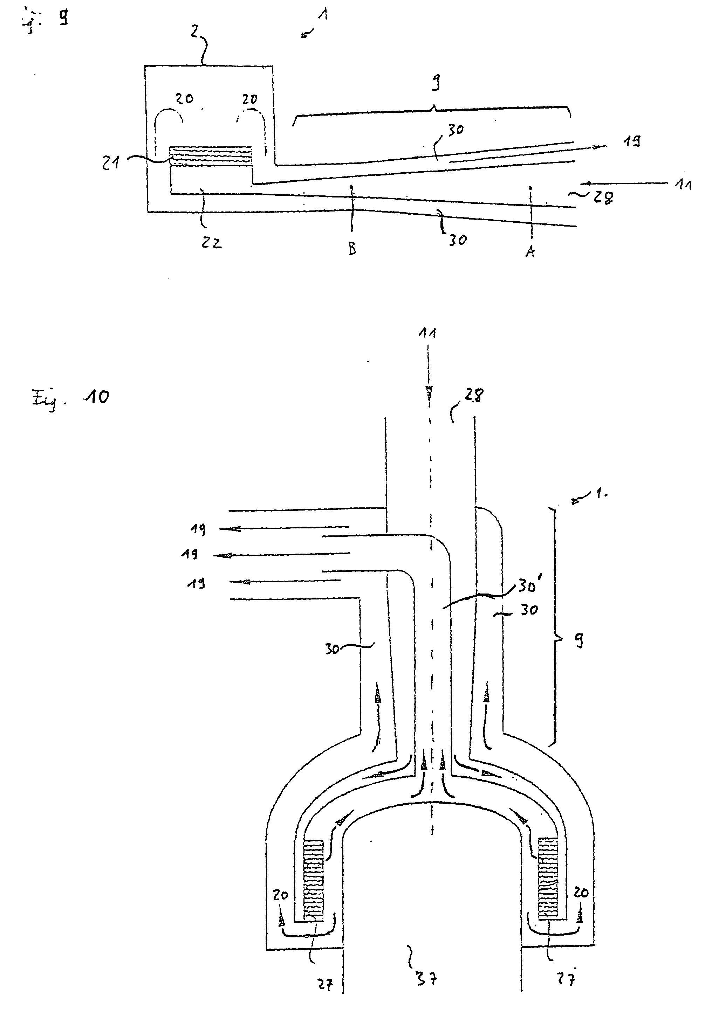

Eine Verengung der Leitungsquerschnitte kann auch kontinuierlich erfolgen. In Abbildung 9 ist eine derartige Ausführungsform dargestellt. Der Durchgang 28 ist dabei innerhalb der Abgasleitung 30 angeordnet. Im Bereich der Wärmetauscherzone 9 verjüngt sich der Leitungsquerschnitt des Durchgangs 28 in Strömungsrichtung mit zunehmender Temperatur des Verbrennungsgemisches 11 und verhindert so wirkungsvoll eine vorzeitige Zündung des Verbrennungsgemisches. Mittels dieser Anordnung ist eine Erwärmung des Verbrennungsgemisches 11 auch über die eigentliche Zündtemperatur des Brenngases 13 hinaus möglich, da bei genügend kleinen Leitungdurchmessern die Zündtemperatur stark erhöht wird. Das hocherhitzte Verbrennungsgemisch 11 tritt beim Verlassen des Durchgangs 28 unmittelbar in die Verbrennungszone 22 ein, die beispielsweise mit einem Porenbrenner 21 versehen ist. Die freigesetzten Verbrennungsabgase 20 dienen zur Erwärmung eines nicht dargestellten Heißgasreservoirs bevor sie durch die Abgasleitung 30 des rekuperativen Wärmetauschers 6 geleitet werden und dort die Erwärmung des Verbrennungsgemisches 11 bewirken. Der Durchmesser der Abgasleitung 30 ist dabei dem sich verändernden Querschnitt des Durchgangs 28 angepaßt. Es ist auch möglich, mehrere Durchgänge 28 und Abgasleitungen 30 in den rekuperativen Wärmetauscher 6 zu integrieren.

In Figur 10 ist eine Ausführungsvariante der in Figur 9 dargestellten fünften Ausführungsform abgebildet. Diese Variante beruht ebenfalls auf dem Prinzip, daß sich der Durchmesser des Durchgangs 28 mit zunehmender Temperatur in Strömungsrichtung des Verbrennungsgemisches 11 verjüngt, die Brennerplatte 27 ist gegenüber dem in Figur 9 dargestellten Aufbau jedoch in Form eines Zylindermantels ausgestaltet, der das Heißgasreservoir 37 umschließt. Eine weitere Besonderheit dieser Variante besteht darin, daß innerhalb der Wärmetauscherzone 9 zwei separate Abgasleitungen 30, 30' vorgesehen sind, wobei die Abgasleitung 30 den Durchgang 28 umhüllt, während die Abgasleitung 30' innerhalb des Durchgangs 28 verläuft. In beiden Abgasleitungen 30, 30' wird das Verbrennungsabgas antiparallel zur Strömungsrichtung des Verbrennungsgemisches 11 geführt. Diese Anordnung ermöglicht in doppelter Hinsicht eine gute Wärmeübertragung, sowohl von den Verbrennungsabgasen 19 auf das Heißgasreservoir 37, bedingt durch die Brennergeometrie, als auch von den Verbrennungsabgasen 19 auf das Verbrennungsgemisch 11. Zusätzlich bietet auch diese Anordnung die Möglichkeit, das Verbrennungsgemisch 11 auf Temperaturen über der eigentlichen Zündtemperatur des Brenngases 13 zu erhitzen.

Verzichtet man auf die Erwärmung eines vorgemischten Verbrennungsgemisches 11, erhitzt statt dessen die Luft 15 und führt die erhitzte Luft 15 und das Brenngas 13 getrennt einer Brennerplatte 27 zu, so ermöglicht diese sechste Ausführungsform eine Auskopplung der in den Verbennungsabgasen gespeicherten Energie auf einem sehr hohen Niveau, da für die Erwärmung der Luft 15 keinerlei Temperaturgrenzen gelten. Der erfindungsgemäße Gasbrenner weist keine räumliche Distanz zwischen rekuperativem Wärmetauscher 6 und der Verbrennungszone 22 auf und es treten daher nach der Erwärmung der Luft kaum Wärmeverluste auf, wenn es gelingt, Luft 15 und Brenngas 13 rasch und möglichst homogen innerhalb der Verbennungszone 22 zu mischen. Eine rasche Vermischung beider Komponenten ist nötig, da sich aufgrund der stark erhitzten Luft 15 das entstehende Verbrennungsgemisch 11 sofort entzündet.

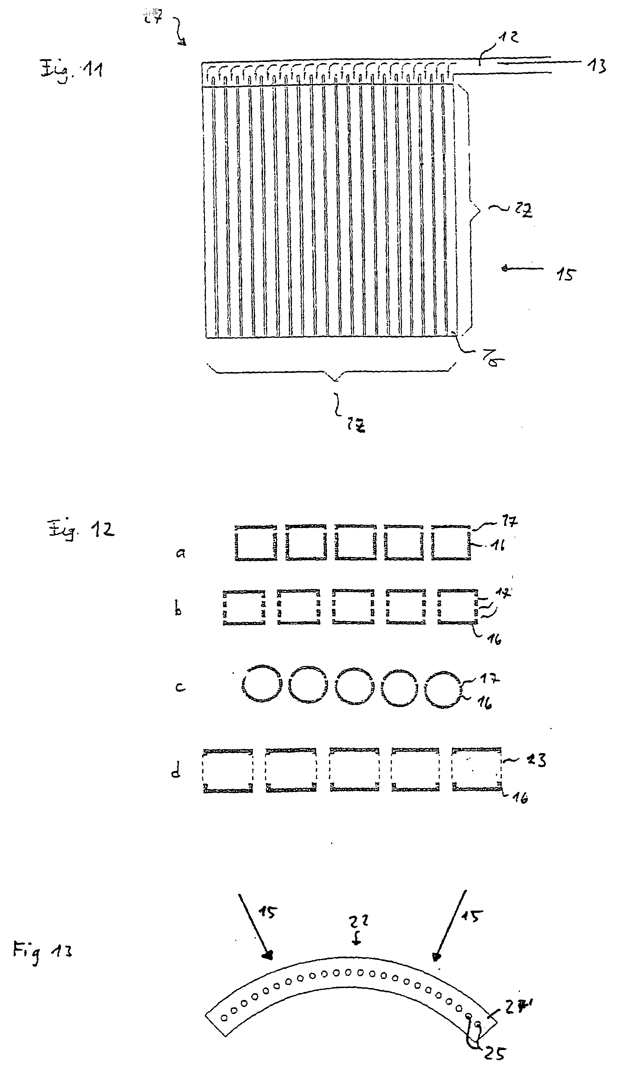

In Figur 11 ist eine Brennerplatte 27 gemäß dieser sechsten Ausführungsform dargestellt, die gleichzeitig die Verbrennungszone 22 bildet. Die Brennerplatte 27 besteht aus einer Vielzahl parallel angeordneter Hohlkörper 16, die beispielsweise aus einem hitzebeständigen Material wie einer Nickel-Chrom-Legierung (INCONEL der Firma Inco Ltd.) oder einem siliciuminfiltrierten Siliciumcarbid bestehen. Die Hohlkörper 16 weisen Öffnungen 17 auf, die, wie in Figur 12a bis d dargestellt, in Form von Bohrungen in einer oder mehreren Reihen übereinander ausgeführt sein können; es eignen sich aber auch in die Hohlkörper 16 integrierte feinmaschige Ausströmgitter 23. Diese Öffnungen 17 sind stets auf der dem benachbarten Hohlkörper zugewandten Längsseite des Hohlkörpers 16 angebracht. Der Querschnitt der Hohlkörper 16 kann je nach Ausführung quadratisch, rechteckig, rund oder oval sein.

Durch die Hohlkörper 16 wird der Brennerplatte 27 das Brenngas 13 zugeführt, das über die Öffnungen 17 in die Verbrennungszone 22 dringt. Senkrecht zur Längsrichtung der Hohlkörper 16 wird parallel zur Oberfläche der Brennerplatte 27 die erwärmte Luft 15 eingeblasen. An den Öffnungen 17 der Hohkörper 16 entsteht jeweils lokal ein sich sofort entzündendes Gemisch, das aufgrund seiner Homogenität zu einer schadstoffarmen Verbrennung führt. Die Brennerplatte 27 kann zusätzlich eine über den Hohlkörpern 16 angeordnete Porenstruktur 21 aufweisen.

Um die guten Verbrennungseigenschaften einer Porenstruktur mit dem Vermischungskonzept der sechsten Ausführungsform direkt zu kombinieren, werden alternativ die Hohlkörper 16 aus einem porösen Material gefertigt, wie beispielsweise aus einer Aluminiumoxidkeramik mit 20 - 40% Porosität oder einem Edelstahl DIN X 2 Cr Ni Mo 18 10 mit 40% Porosität. Das Brenngas 13 diffundiert durch die Poren des Materials und gelangt so in die Verbrennungszone 22. Die Anbringung von Öffnungen 17 an den Hohlkörpern 16 erübrigt sich.

Anstatt eine Vielzahl von porösen Hohlkörper 16 vorzusehen kann auch eine aus einem porösen Material gefertigte und mit Aussparungen versehene Brennerplatte 27' verwendet werden. Eine Brennerplatte 27' gemäß dieser siebten Ausführungsform ist in Figur 13 dargestellt. Die Brennerplatte 27' beinhaltet eine Vielzahl von parallel angeordneten Aussparungen, die als Brenngaszuleitungen 25 dienen und in denen das Brenngas 13 parallel zur Oberfläche der Brennerplatte 27' geführt wird. Die Brennerplatte 27' kann planar oder, wie in Figur 13 dargestellt, gekrümmt sein. Das Brenngas 13 wird über die Brenngaszuleitungen 25 der Brennerplatte 27' zugeführt, diffundiert durch das poröse Material der Brennerplatte 27' und gelangt in die Verbrennungszone 22. Die rekuperativ vorerhitzte Luft 15 wird senkrecht zur Oberfläche der Brennerplatte 27' eingeblasen. Aufgrund der Porenstruktur der Brennerplatte 27' entwickelt sich ein hoher Strahlungsanteil bei der Verbrennung und der Brenner weist dadurch einen hohen Wirkungsgrad auf.

Die Herstellung der aus einem porösen Material bestehenden Brennerplatte 27' bzw. der Hohlkörper 16 erfolgt durch Sinterung eines keramischen bzw. metallischen Pulvers, wobei die Brenngaszuleitungen 25 in Form von Aussparungen berücksichtigt werden.

Wird bei einem Gasbrenner gemäß dem sechsten und siebten Ausführungsbeispiel nicht nur die Luft 15 vorerhitzt sondern auch das separat zugeführte Brenngas 13, so läßt sich der Wirkungsgrad des Gasbrenners weiter steigern. Hierbei wird die Luft 15 möglichst auf die Temperatur der Verbrennungsabgase 20 erwärmt (ungefähr 800°C) und das Brenngas auf Temperaturen knapp unter der Zündtemperatur (ungefähr 600°C).

## Patentansprüche

1. Gasbrenner mit einer Brennerplatte (27), mit einer Brenngaszufuhr und einer Luftzufuhr oder mit einer Zufuhr für ein Verbrennungsgemisch und mit mindestens einer Abgasleitung zur Ableitung der Verbrennungsabgase, wobei ein Wärmeübergang von den Verbrennungsabgasen auf die Luft oder das Verbrennungsgemisch mittels eines rekuperativen Wärmetauschers (6) erfolgt, der mindestens einen Durchgang für die Luft oder das Verbrennungsgemisch aufweist und wobei sich die Brennerplatte (21, 27, 27') im Bereich eines Austritts der Luft (15) oder des Verbrennungsgemisches (11) aus dem Wärmetauscher (6) befindet, **dadurch gekennzeichnet, daß** innerhalb des Wärmetauschers (6) in Bereichen niedriger Temperatur eine Isolation (10) vorgesehen ist

2. Gasbrenner nach Anspruch 1, **dadurch gekennzeichnet, daß** die Brennerplatte (27) einen Porenbrenner (21) beinhaltet.

3. Gasbrenner nach Anspruch 1, **dadurch gekennzeichnet, daß** die Isolation (10) eine reflektierende Isolation ist.

4. Gasbrenner nach einem der Ansprüche 1 bis 3, **dadurch gekennzeichnet, daß** im Falle mehrerer Durchgänge (28, 29) diese nebeneinander angeordnet sind.

5. Gasbrenner nach einem der Ansprüche 1 bis 4, **dadurch gekennzeichnet, daß** der Durchgang (28, 29) und/oder die Abgasleitung (30) innerhalb des Wärmetauschers (6) in Form von Mikrokanälen ausgeführt sind (Fig. 6 bis 8).

6. Gasbrenner nach einem der vorhergehenden Ansprüche, **dadurch gekennzeichnet, daß** an der Austrittsöffnung des Durchgangs (28, 29) aus dem Wärmetauscher (6) der Querschnitt des Durchgangs (28) verringert ist.

7. Gasbrenner nach Anspruch 6, **dadurch gekennzeichnet, daß** zur Verringerung des Querschnitts des Durchgangs (28) Querstreben (36) vorgesehen sind (Fig. 8).

8. Gasbrenner nach einem der vorhergehenden Ansprüche, **dadurch gekennzeichnet, daß** der Durchgang (28, 29) zumindest teilweise innerhalb der Abgasleitung (30) angeordnet ist (Fig. 9, 10).

9. Gasbrenner nach einem der vorhergehenden Ansprüche, **dadurch gekennzeichnet, daß** die Brennerplatte (27) eine Vielzahl zueinander und zur Oberfläche der Brennerplatte (27) parallel angeordneter Hohlkörper (16) umfaßt, die Austrittsöffnungen (17) an den Längsseiten aufweisen, durch die das Brenngas (13) in die Luft (15) gelangt und sich mit dieser vermischt (Fig. 11, 12).

10. Gasbrenner nach Anspruch 9, **dadurch gekennzeichnet, daß** die Öffnungen (17) dergestalt an den Längsseiten der Hohlkörper (16) angebracht sind, daß sie den jeweils benachbarten Hohlkörpern zugewandt sind.

11. Gasbrenner nach Anspruch 9 oder 10, **dadurch gekennzeichnet, daß** die Austrittsöffnungen (17) in Form von Bohrungen in einer oder mehreren Reihen übereinander ausgeführt sind (Fig. 12).

12. Gasbrenner nach Anspruch 9 oder 10, **dadurch gekennzeichnet, daß** die Austrittsöffnungen (17) in Form von in die Hohlkörper (16) eingearbeiteten Ausströmgittern (23) ausgeführt sind (Fig.12).

13. Gasbrenner nach einem der Ansprüche 9 bis 12, **dadurch gekennzeichnet, daß** das Material der Hohlkörper (16) eine Nickel-Chrom-Legierung enthält.

14. Gasbrenner nach einem der Ansprüche 9 bis 12, **dadurch gekennzeichnet, daß** das Material der Hohlkörper (16) ein siliciuminfiltriertes Siliciumcarbid enthält.

15. Gasbrenner nach einem der Ansprüche 1 bis 8, **dadurch gekennzeichnet, daß** die Brennerplatte (27) eine Vielzahl zueinander und zur Oberfläche der Brennerplatte (27) parallel angeordneter Hohlkörper (16) aus einem porösen Material umfaßt. (Fig.11).

16. Gasbrenner nach einem der Ansprüche 1 bis 8, **dadurch gekennzeichnet, daß** die Brennerplatte (27') eine Vielzahl zueinander und zur Oberfläche der Brennerplatte (27') parallel angeordneter Aussparungen in einem porösen Material als Brenngaszuleitungen (25) umfaßt. (Fig. 13).

17. Gasbrenner nach Anspruch 15 oder 16, **dadurch gekennzeichnet, daß** das poröse Material eine Keramik beinhaltet.

18. Gasbrenner nach Anspruch 17, **dadurch gekennzeichnet, daß** die Keramik eine Aluminiumoxidkeramik ist.

19. Gasbrenner nach Anspruch 15 oder 16, **dadurch gekennzeichnet, daß** das poröse Material ein Edelstahl DIN X 2 Cr Ni Mo 18 10 ist.

20. Gasbrenner nach einem der Ansprüche 15 bis 19, **dadurch gekennzeichnet, daß** das poröse Material eine Porosität von 20 bis 40% aufweist.

21. Gasbrenner nach einem der vorhergehenden Ansprüche, **dadurch gekennzeichnet, daß** die Brennerplatte (27) in Form eines Zylindermantels ausgeführt ist und ein Heißgasreservoir (37) umschließt (Fig.10).

22. Verfahren zum Betreiben eines Gasbrenners nach einem der vorhergehenden Ansprüche, **dadurch gekennzeichnet, daß** die Luft (15) oder das Verbrennungsgemisch (11) mittels des Wärmetauschers (6) auf eine Temperatur erwärmt werden, die über der Zündtemperatur des Brenngases (13) liegt.

23. Verfahren nach Anspruch 22, **dadurch gekennzeichnet, daß** das Verbrennungsgemisch (11) auf eine Temperatur erwärmt wird, die über der Zündtemperatur des Brenngases (13) liegt, wobei zur Vermeidung einer vorzeitigen Zündung des Verbrennungsgemisches (11) der Durchmesser des Durchgangs (28) innerhalb des Wärmetauschers (6) in Richtung einer zunehmenden Temperatur des Verbrennungsgemisches (11) vorzugsweise kontinuierlich verjüngt wird (Fig.9, 10).

24. Verfahren nach Anspruch 22 oder 23, **dadurch gekennzeichnet, daß** zunächst in einem Vormischbereich (4) eine Vermischung von Luft (15) und Brenngas (13) zum Verbrennungsgemisch (11) erfolgt und dieses dann dem Durchgang (28, 29) zur Brennerplatte (21, 27) zugeführt wird.

25. Verfahren nach Anspruch 22, **dadurch gekennzeichnet, daß** die Luft (15) auf eine Temperatur oberhalb der Zündtemperatur des Brenngases (13) erwärmt und unmittelbar in der Brennerplatte (27) mit dem Brenngas (13) vermischt wird.

26. Verfahren nach Anspruch 25, **dadurch gekennzeichnet, daß** das Brenngas (13) in der Brennerplatte in parallel angeordnete und mit Austrittsöffnungen (17) versehene Hohlkörper (16) geleitet wird, während die vorgewärmte Luft (15) in der Brennerplatte (27) senkrecht zur Längsrichtung der Hohlkörper (16) und parallel zur Oberfläche der Brennerplatte (27) geführt wird (Fig.11 12).

27. Verfahren nach einem der Ansprüche 22 bis 26, **dadurch gekennzeichnet, daß** innerhalb des Wärmetauschers (6) die Strömungsrichtung der Verbrennungsabgase (20) antiparallel zur Durchgangsrichtung des Verbrennungsgemisches (11) verläuft.

28. Verfahren nach einem der Ansprüche 22 bis 26, **dadurch gekennzeichnet, daß** innerhalb des Wärmetauschers (6) der Durchgang (28, 29) im wesentlichen senkrecht zu seiner Längserstreckungsrichtung von den Verbrennungsabgasen (20) umströmt wird (Fig.1 bis 4).

29. Verfahren nach Anspruch 27 oder 28, **dadurch gekennzeichnet, daß** die Strömungsrichtung der Verbrennungsabgase (20) wenigstens einmal vorzugsweise um 180° umgelenkt wird (Kreuz-Gegenstrom-Prinzip) (Fig.3, 4).

30. Verwendung eines Gasbrenners nach einem der Ansprüche 1 bis 21 als Heißgasquelle zum Betrieb eines Stirlingmotors.

## Claims

1. Gas burner having a burner plate (27), having a fuel gas feed and an air feed or having a feed for a combustion mix, and having at least one exhaust-gas line for discharging the combustion exhaust gases, with heat being transferred from the combustion exhaust gases to the air or the combustion mix by means of a recuperative heat exchanger (6), which has at least one passage for the air or the combustion mix, and the burner plate (21, 27, 27') being located in the region of an outlet for the air (15) or the combustion mix (11) from the heat exchanger (6), **characterized in that** insulation (10) is provided inside the heat exchanger (6) in low-temperature regions.

2. Gas burner according to Claim 1, **characterized in that** the burner plate (27) includes a porous burner (21).

3. Gas burner according to Claim 1, **characterized in that** the insulation (10) is reflective insulation.

4. Gas burner according to one of Claims 1 to 3, **characterized in that**, in the case of a plurality of passages (28, 29), these passages are arranged next to one another.

5. Gas burner according to one of Claims 1 to 4, **characterized in that** the passage (28, 29) and/or the exhaust-gas line (30) are formed inside the heat exchanger (6) in the form of microchannels (Fig. 6 to 8).

6. Gas burner according to one of the preceding claims, **characterized in that** the cross section of the passage (28) is reduced at the outlet opening of the passage (28, 29) from the heat exchanger (6).

7. Gas burner according to Claim 6, **characterized in that** cross-struts (36) are provided for the purpose of reducing the cross section of the passage (28) (Fig. 8).

8. Gas burner according to one of the preceding claims, **characterized in that** the passage (28, 29) is arranged at least partially within the exhaust-gas line (30) (Fig. 9, 10).

9. Gas burner according to one of the preceding claims, **characterized in that** the burner plate (27) comprises a multiplicity of hollow bodies (16) which are arranged parallel to one another and to the surface of the burner plate (27) and have outlet openings (17), through which the fuel gas (13) passes into the air (15) and mixes with the latter, at the longitudinal sides (Fig. 11, 12).

10. Gas burner according to Claim 9, **characterized in that** the openings (17) are formed at the longitudinal sides of the hollow bodies (16) in a form which is such that they face the respectively adjacent hollow bodies.

11. Gas burner according to Claim 9 or 10, **characterized in that** the outlet openings (17) are designed in the form of bores in one or more rows above one another (Fig. 12).

12. Gas burner according to Claim 9 or 10, **characterized in that** the outlet openings (17) are designed in the form of outflow grates (23) machined into the hollow body (16) (Fig. 12).

13. Gas burner according to one of Claims 9 to 12, **characterized in that** the material of the hollow bodies (16) includes a nickel-chromium alloy.

14. Gas burner according to one of Claims 9 to 12, **characterized in that** the material of the hollow bodies (16) contains a silicon-infiltrated silicon carbide.

15. Gas burner according to one of Claims 1 to 8, **characterized in that** the burner plate (27) comprises a multiplicity of hollow bodies (16) which are made from a porous material and are arranged parallel to one another and to the surface of the burner plate (27) (Fig. 11).

16. Gas burner according to one of Claims 1 to 8, **characterized in that** the burner plate (27') comprises a multiplicity of cutouts, arranged parallel to one another and to the surface of the burner plate (27'), in a porous material as fuel-gas feed lines (25) (Fig. 13).

17. Gas burner according to Claim 15 or 16, **characterized in that** the porous material includes a ceramic.

18. Gas burner according to Claim 17, **characterized in that** the ceramic is an aluminium oxide ceramic.

19. Gas burner according to Claim 15 or 16, **characterized in that** the porous material is a stainless steel DIN X 2 CR Ni Mo 18 10.

20. Gas burner according to one of Claims 15 to 19, **characterized in that** the porous material has a porosity of from 20 to 40%.

21. Gas burner according to one of the preceding claims, **characterized in that** the burner plate (27) is designed in the form of a cylinder casing and surrounds a hot-gas reservoir (37) (Fig. 10).

22. Method for operating a gas burner according to one of the preceding claims, **characterized in that** the air (15) or the combustion mix (11) is heated by means of the heat exchanger (6) to a temperature which is above the ignition temperature of the fuel gas (13).

23. Method according to Claim 22, **characterized in that** the combustion mix (11) is heated to a temperature which is above the ignition temperature of the fuel gas (13), with the diameter of the passage (28) within the heat exchanger (6) preferably being narrowed continuously in the direction of an increase in temperature of the combustion mix (11) in order to avoid premature ignition of the combustion mix (11) (Fig. 9, 10).

24. Method according to Claim 22 or 23, **characterized in that** first of all, in a premixing region (4), air (15) and fuel gas (13) are mixed to form the combustion mix (11), and the latter is then fed to the passage (28, 29) leading to the burner plate (21, 27).

25. Method according to Claim 22, **characterized in that** the air (15) is heated to a temperature above the ignition temperature of the fuel gas (13) and is directly mixed with the fuel gas (13) in the burner plate (27).

26. Method according to Claim 25, **characterized in that** the fuel gas (13), in the burner plate, is passed into hollow bodies (16) which are arranged parallel to one another and are provided with outlet openings (17), while the preheated air (15), in the burner plate (27), is guided perpendicular to the longitudinal direction of the hollow bodies (16) and parallel to the surface of the burner plate (27) (Fig. 11, 12).

27. Method according to one of Claims 22 to 26, **characterized in that** within the heat exchanger (6) the direction of flow of the combustion exhaust gases (20) runs parallel but in the opposite direction to the passage direction of the combustion mix (11).

28. Method according to one of Claims 22 to 26, **characterized in that** within the heat exchanger (6) the combustion exhaust gases (20) flow around the passage (28, 29) substantially perpendicular to the direction of its longitudinal extent (Fig. 1 to 4).

29. Method according to Claim 27 or 28, **characterized in that** the direction of flow of the combustion exhaust gases (20) is diverted at least once, preferably through 180° (cross-countercurrent principle) (Fig. 3, 4).

30. Use of a gas burner according to one of Claims 1 to 21 as a hot gas source for operating a Stirling engine.

## Revendications

1. Brûleur à gaz comportant une plaque de brûleur (27), une amenée de gaz, une amenée d'air ou une amenée d'un mélange combustible et au moins une tubulure pour évacuer les gaz produits par la combustion, un transfert de chaleur s'effectuant des gaz produits par la combustion à l'air ou au mélange combustible par l'intermédiaire d'un échangeur thermique (6) de récupération, qui présente au moins un passage pour l'air ou pour le mélange combustible, la plaque de brûleur (21, 27, 27') se trouvant dans la zone où l'air (15) ou le mélange combustible (11) sort de l'échangeur thermique (6),
**caractérisé par**
une isolation à l'intérieur de l'échangeur thermique (6) dans les zones de basse température.

2. Brûleur à gaz selon la revendication 1,
**caractérisé en ce que**
la plaque de brûleur (27) contient un brûleur à pores (21).

3. Brûleur à gaz selon la revendication 1,
**caractérisé en ce que**
l'isolation (10) est une isolation réfléchissante.

4. Brûleur à gaz selon une des revendications 1 à 3,
**caractérisé en ce que**
dans le cas où il existe plusieurs passages (28, 29), ceux-ci sont disposés côte à côte.

5. Brûleur à gaz selon une des revendications 1 à 4,
**caractérisé en ce que**
le passage (28, 29) et/ou la conduite des gaz (30) produits par la combustion sont réalisés à l'intérieur de l'échangeur thermique (6) sous la forme de micro-canaux (Fig. 6 et 8).

6. Brûleur à gaz selon une des revendications précédentes,
**caractérisé en ce que**
le passage (28, 29), à sa sortie de l'échangeur thermique (6) présente une section réduite de passage (28).

7. Brûleur à gaz selon la revendication 6,
**caractérisé en ce que**
pour réduire la section du passage (28), il est prévu des barrettes transversales (36) (Fig. 8).

8. Brûleur à gaz selon une des revendications précédentes,
**caractérisé en ce que**
le passage (28, 29) est, au moins en partie, disposé à l'intérieur de la conduite des gaz (30) produits par la combustion (Fig. 9, 10).

9. Brûleur à gaz selon une des revendications précédentes,
**caractérisé en ce que**
la plaque de brûleur (27) comprend un certain nombre de corps creux (16) parallèles entre eux et à la surface de la plaque de brûleur (27), et qui présentent sur leurs côtés longitudinaux des ouvertures de sortie (17) à travers lesquelles le gaz combustible (13) parvient à l'air (15) et se mélange à celui-ci (Fig. 11, 12).

10. Brûleur à gaz selon la revendication 9,
**caractérisé en ce que**
les ouvertures de sortie (17) sont disposées le long des côtés longitudinaux des corps creux (16) de manière à se trouver chaque fois en face du corps creux voisin.

11. Brûleur à gaz selon la revendication 9 ou 10,
**caractérisé en ce que**
les ouvertures de sortie (17) sont des perçages disposés les uns au-dessus des autres en une ou plusieurs rangées (Fig. 12).

12. Brûleur à gaz selon la revendication 9 ou 10,
**caractérisé en ce que**
les ouvertures de sortie (17) ont la forme de grilles de sortie (23) insérées dans les corps creux (16).

13. Brûleur à gaz selon une des revendications 9 ou 12,
**caractérisé en ce que**
la matière constituant le corps creux (16) contient un alliage nickelchrome.

14. Brûleur à gaz selon une des revendications 9 ou 12,
**caractérisé en ce que**
la matière constituant les corps creux est un carbure de silicium infiltré.

15. Brûleur à gaz selon une des revendications 1 à 8,
**caractérisé en ce que**
la plaque de brûleur (27) comprend un certain nombre de corps creux (16) parallèles entre eux et à la surface de la plaque de brûleur (27), constitués d'un matériaux poreux (Fig. 11).

16. Brûleur à gaz selon une des revendications 1 à 8,
**caractérisé en ce que**
la plaque de brûleur (27') présente un certain nombre d'évidements parallèles entre eux et à la surface de cette plaque, réalisés dans un matériau poreux et constituant des conduites (25) d'amenée de gaz combustible (Fig. 13).

17. Brûleur à gaz selon la revendication 15 ou 16,
**caractérisé en ce que**
le matériau poreux contient une céramique.

18. Brûleur à gaz selon la revendication 17,
**caractérisé en ce que**
la céramique est une céramique d'oxyde d'aluminium.

19. Brûleur à gaz selon la revendication 15 ou 16,
**caractérisé en ce que**
le matériau poreux est un acier spécial DIN X 2 Cr Ni Mo 18 10.

20. Brûleur à gaz selon une des revendications 15 à 19,
**caractérisé en ce que**
le matériau poreux présente une porosité allant de 20 à 40 %.

21. Brûleur à gaz selon une des revendications précédentes,
**caractérisé en ce que**
la plaque du brûleur (27) a la forme d'une enveloppe cylindrique qui entoure un réservoir de gaz chaud (37) (Fig. 10).

22. Procédé pour faire fonctionner un brûleur à gaz selon une des revendications précédentes,
**caractérisé en ce que**
l'air (15) ou le mélange combustible (11) est échauffé par l'échangeur thermique (6) à une température qui dépasse la température d'inflammation du gaz combustible (13).

23. Procédé selon la revendication 22,
**caractérisé en ce que**
le mélange combustible (11) est échauffé à une température qui dépasse la température d'inflammation du gaz combustible (13), et pour éviter une inflammation prématurée de ce mélange (11), le diamètre du passage (28) à l'intérieur de l'échangeur thermique (6) est réduit de préférence de manière continue dans le sens de l'augmentation de la température du mélange combustible (11) (Fig. 9, 10).

24. Procédé selon la revendication 22 ou 23,
**caractérisé en ce que**
dans une zone de prémélange (4), il se produit d'abord un prémélange de l'air (15) et du gaz combustible (13) pour donner le mélange de combustion (11) qui est alors amené au passage (28, 29) conduisant à la plaque de brûleur (21, 27).

25. Procédé selon la revendication 22,
**caractérisé en ce que**
l'air (15) est échauffé à une température dépassant la température d'inflammation du gaz combustible (13) et mélangé directement à ce gaz dans la plaque de brûleur (27).

26. Procédé selon la revendication 25,
**caractérisé en ce que**
le gaz combustible (13) circule dans la plaque de brûleur à l'intérieur de corps creux (16) parallèles et présentant des ouvertures de sortie (17), tandis que l'air préchauffé (15) se déplace dans la plaque de brûleur (27) perpendiculairement à la direction longitudinale des corps creux (16) et parallèlement à la surface de la plaque de brûleur (27) (Fig. 11, 12).

27. Procédé selon une des revendication 22 à 26,
**caractérisé en ce qu'**
à l'intérieur de l'échangeur thermique (6), l'écoulement des gaz (20) produits par la combustion est anti-parallèle à la direction de passage du mélange de combustion (11).

28. Procédé selon une des revendication 22 à 26,
**caractérisé en ce qu'**
à l'intérieur de l'échangeur thermique (6), le passage (28, 29) est contourné par les gaz (20) produits par la combustion essentiellement perpendiculairement à sa direction longitudinale (Fig. 1 à 4).

29. Procédé selon une revendication 27 ou 28,
**caractérisé en ce que**
la direction d'écoulement des gaz (20) produits par la combustion est renvoyée au moins une fois, de préférence à 180° (principe du contre-courant croisé) (Fig. 3, 4).

30. Utilisation d'un brûleur à gaz selon une des revendications 1 à 21, comme source de gaz chaud pour faire fonctionner un moteur Stirling.
